# DEMANDE DE BREVET EUROPEEN

(11) **EP 2 830 179 A2**
(43) Date de publication de la demande: **28.01.2015**
(21) Numéro de dépôt: 14177854.8
(22) Date de dépôt: 21.07.2014
(51) Int. Cl.: H02H 7/085, H02K 11/00, H02K 5/22

(54) **Machine électrique tournante, support de sonde de température et unité de mesure thermique correspondants**

(30) Priorité: 23.07.2013 FR 1357215
(71) Demandeur: VALEO EQUIPEMENTS ELECTRIQUES MOTEUR, 94046 Créteil Cedex (FR)
(72) Inventeur: el Baraka, Khadija, 77600 BUSSY ST GEORGES (FR); Jugovic, Svetislav, 91260 JUVISY-SUR-ORGE (FR)
(74) Mandataire: Ribeil, Alexandre

(57) **Abrégé**

L'invention porte principalement sur une machine électrique tournante comportant un stator (2) fixé à l'intérieur d'un boîtier (7) comportant un flasque avant (5) et un flasque arrière (6) supportant chacun un palier pour le montage à rotation d'un arbre de rotor, un chignon de bobinage (10) s'étendant en saillie par rapport à un côté du stator (2), et une cavité (28) allongée axialement délimitée par une face interne d'un des flasques (5, 6) du boîtier (7) et une face dudit chignon de bobinage (10) tournée vers ledit flasque (6), caractérisée en ce qu'elle comporte en outre un support de sonde (13) portant une sonde de température (12), ledit support de sonde (13) étant configuré pour être inséré par déformation à l'intérieur de ladite cavité allongée (28) de manière à prendre appui contre ladite face interne du flasque (6) délimitant ladite cavité (28) pour le maintien de ladite sonde de température (12) en contact avec ledit chignon de bobinage (10). L'invention a également pour objet le support (13) de sonde de température ainsi que l'unité de mesure thermique (25) correspondants.

## Description

### DOMAINE TECHNIQUE DE L'INVENTION

La présente invention porte sur une machine électrique tournante ainsi que sur le support de sonde de température et l'unité de mesure thermique correspondants.

L'invention trouve une application particulièrement avantageuse avec les alternateurs pour véhicules automobiles mais pourrait également être utilisée avec des machines électriques tournantes de type moteur ou alterno-démarreurs.

### ARRIERE PLAN TECHNOLOGIQUE

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur comme décrit dans le document EP0803962 ou d'un moteur électrique comme décrit dans le document EP0831580.

La machine électrique comporte un boîtier portant le stator. Ce boîtier est configuré pour porter à rotation l'arbre par exemple par l'intermédiaire de roulements, tels que des roulements à billes et/ou à aiguilles. Le rotor pourra comporter un corps réalisé en tôle feuilletée qui comporte des logements. Des aimants permanents sont positionnés à l'intérieur d'au moins certains de ces logements comme visible par exemple dans les figures 1 et 2 du document EP0803962.

Le stator d'un alternateur, tel qu'employé dans l'équipement des véhicules automobiles, est habituellement constitué par un empilage de tôles minces formant une couronne, dont la face intérieure est pourvue d'encoches ouvertes vers l'intérieur recevant les bobinages des phases, généralement au nombre de trois. Dans les stators d'alternateurs de ce genre, les types de bobinages les plus couramment utilisés sont, d'une part, les bobinages dits "concentriques" constitués par des bobines fermées sur elles-mêmes qui sont enroulées autour des dents du stator, et d'autre part, les bobinages du type dit "ondulé", qui sont connus par exemple par le document FR2483702. Les parties des bobinages qui s'étendent en saillie axiale de chaque côté du stator sont appelées "chignons de bobinage".

Dans toutes les configurations, il est important de prévoir des moyens de protection la machine électrique en cas de surchauffe pour éviter son endommagement. Pour détecter l'état thermique de la machine, plusieurs solutions sont envisageables. Ainsi, dans le cas d'une machine surdimensionnée par rapport à l'application, la mise en oeuvre d'un simple algorithme embarqué suffit pour déterminer la température du stator. En revanche, lorsque l'on souhaite tirer profit au maximum des performances de la machine, il est nécessaire d'améliorer la précision de l'algorithme estimateur de température, ce qui nécessite d'augmenter la taille du module dédié. Or, cela n'est pas forcément possible compte tenu des contraintes d'implantation de la machine dans son environnement qui peuvent être très strictes, comme c'est le cas par exemple pour un alternateur installé dans la partie avant d'un véhicule automobile.

On privilégie donc dans ce type de situation l'utilisation d'une sonde de température implantée à l'intérieur de la machine. Cette sonde est connectée à un circuit de protection thermique configuré pour couper l'alimentation électrique de la machine lors de la détection d'une surchauffe.

Le document WO2013/030644 décrit ainsi l'utilisation d'une sonde de température maintenue plaquée contre un chignon de bobinage du stator au moyen d'un support de sonde. Toutefois, la surface de contact entre le support de sonde et la sonde est réduite, ce qui rend le système sensible aux vibrations. En outre, le support de sonde présente un encombrement circonférentiel important posant des difficultés d'intégration.

On connaît également le document US2006262442 qui enseigne l'utilisation d'un lame ressort ménagée dans un interconnecteur assurant un plaquage de la sonde de température contre un chignon de bobinage par action axiale. Toutefois, il pourra se poser des problèmes de mise en contact de la sonde avec le chignon de bobinage du fait de la dilatation de la lame ressort. En outre, un tel système nécessite de prévoir des moyens pour éviter les court-circuits entre la lame ressort et les traces de l'interconnecteur.

### OBJET DE L'INVENTION

L'invention vise à remédier efficacement à au moins un de ces inconvénients en proposant une machine électrique tournante comportant un stator fixé à l'intérieur d'un boîtier comportant un flasque avant et un flasque arrière supportant chacun un palier pour le montage à rotation d'un arbre de rotor, un chignon de bobinage s'étendant en saillie par rapport à un côté du stator, et une cavité allongée axialement délimitée par une face interne d'un des flasques du boîtier et une face dudit chignon de bobinage tournée vers ledit flasque, caractérisée en ce qu'elle comporte en outre un support de sonde portant une sonde de température, ledit support de sonde étant configuré pour être inséré par déformation à l'intérieur de ladite cavité allongée de manière à prendre appui contre ladite face interne du flasque délimitant ladite cavité pour le maintien de ladite sonde de température en contact avec ledit chignon de bobinage.

L'invention permet ainsi de maximiser la zone contact entre le support et la sonde de température tout en garantissant un bon plaquage de la sonde contre le chignon de bobinage. On réduit ainsi la sensibilité du système aux vibrations de la machine. En outre, l'effet ressort du support permet d'absorber les différences de dimensions d'une machine à une autre dues aux tolérances de montage du stator à l'intérieur du boîtier. L'invention permet également de garantir le positionnement correct de la sonde de température à un coût minimal.

Selon une réalisation, ledit support de sonde s'étend majoritairement dans un plan défini par l'intersection d'un axe du stator et d'un rayon du stator. L'encombrement circonférentiel de l'ensemble est ainsi réduit.

Selon une réalisation, ledit support de sonde comporte en outre une base de fixation sur un rebord d'orientation radiale dudit flasque délimitant ladite cavité allongée.

Selon une réalisation, ledit support de sonde comporte un dispositif de guidage d'au moins un fil de connexion de ladite sonde de température.

Selon une réalisation, ledit dispositif de guidage comporte au moins une agrafe configurée en sorte que le fil de connexion de ladite sonde de température est coincé entre ladite agrafe et une face dudit support de sonde tournée vers ledit chignon de bobinage.

Selon une réalisation, ledit support de sonde présente une forme en U.

Selon une réalisation, ledit support de sonde comporte un décrochement sur lequel est positionné la sonde de température formant saillie par rapport à une face dudit support de sonde tournée vers ledit chignon de bobinage. On garantit ainsi un plaquage efficace de la sonde contre le chignon de bobinage tout en maintenant à distance le support de sonde par rapport à la face du chignon afin d'éviter d'éventuels court-circuits.

Selon une réalisation, le flasque délimitant ladite cavité allongée est le flasque portant un module de commande et un module de puissance de la machine électrique.

L'invention a également pour objet un support de sonde de température pour machine électrique tournante caractérisé en ce qu'il comporte un premier bras et un deuxième bras en vis-à-vis reliés entre eux par un fond de manière à présenter une forme en U, ledit support de sonde étant apte à se déformer élastiquement pour assurer un plaquage d'une sonde de température portée par un des bras contre un chignon de bobinage d'un stator de machine électrique.

Selon une réalisation, le support de sonde de température comporte une base de fixation s'étendant transversalement par rapport à une direction longitudinale d'allongement du support de sonde depuis une extrémité libre du bras opposé à celui portant la sonde de température.

Selon une réalisation, un décrochement réalisé sur le bras sur lequel est positionné ladite sonde de température forme une saillie par rapport à une face du bras destinée à être tournée vers ledit chignon de bobinage.

Selon une réalisation, le support de sonde comporte un dispositif de guidage d'au moins un fil de connexion de ladite sonde de température.

Selon une réalisation, ledit dispositif de guidage comporte au moins une agrafe configurée en sorte que le fil de connexion de ladite sonde de température s'étendant suivant une direction d'allongement du bras est coincé entre ladite agrafe et une face dudit bras destinée à être tournée vers ledit chignon de bobinage.

En outre, l'invention porte sur une unité de mesure thermique, caractérisée en ce qu'elle comporte une sonde de température, un connecteur déporté relié à la sonde par l'intermédiaire d'au moins un fil de connexion ainsi qu'un support de sonde selon l'invention.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
La figure 1 représente une vue en perspective d'un alternateur selon l'invention monté dans son boîtier;
La figure 2 est une vue en perspective d'une unité de mesure thermique selon l'invention;
La figure 3 montre une vue en coupe longitudinale de l'alternateur de la figure 1 ;

Les éléments identiques, similaires, ou analogues conservent la même référence d'une figure à l'autre.

### DESCRIPTION D'EXEMPLES DE REALISATION DE L'INVENTION

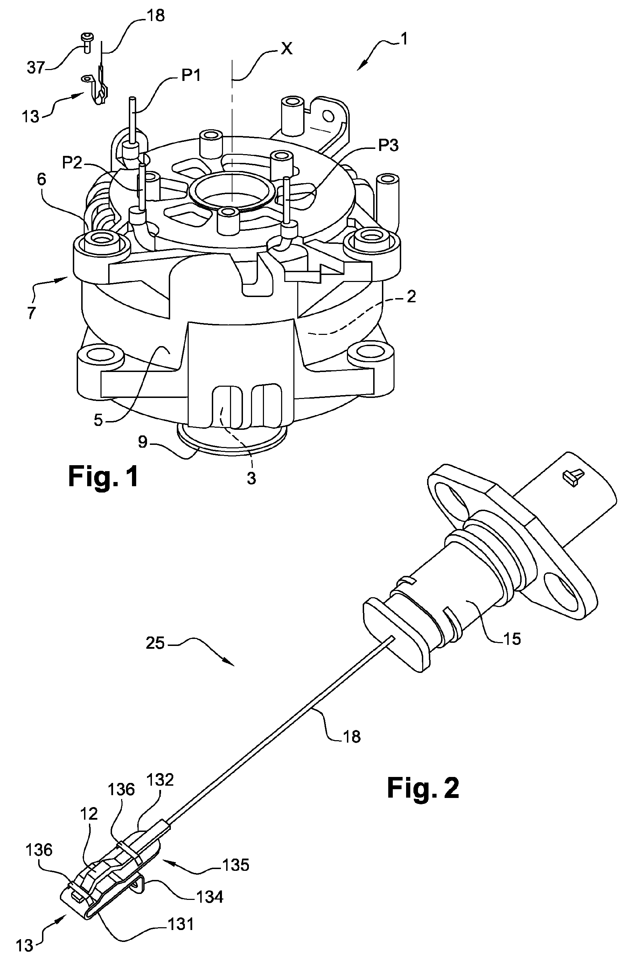

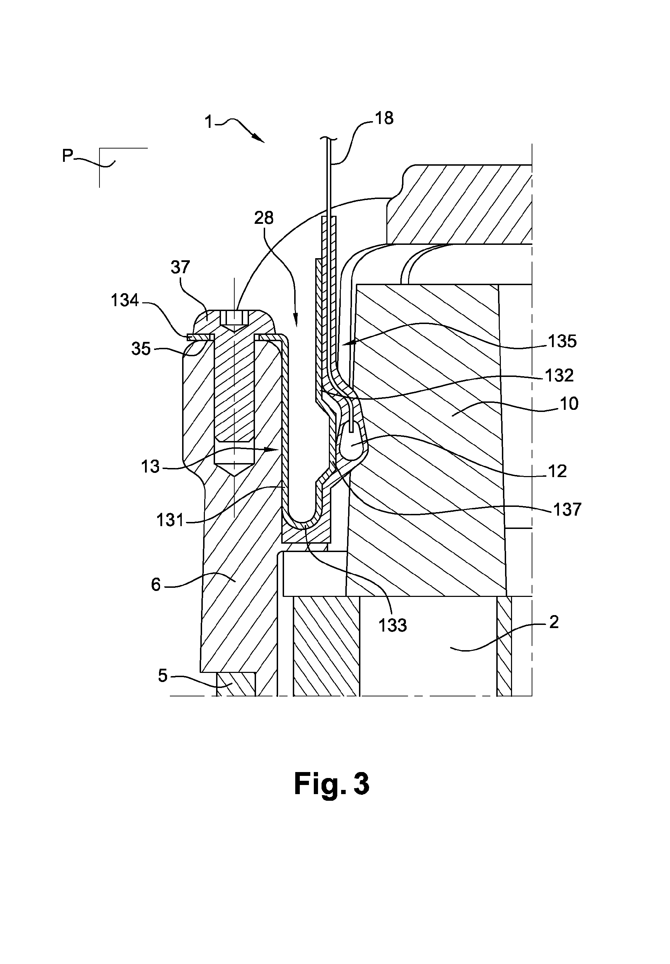

Les figures 1 et 3 montrent un alternateur 1 de véhicule automobile comportant un stator 2 et un rotor qui est monté sur un arbre 3. Cet arbre 3 tournant dans des paliers supportés par des flasques avant 5 et arrière 6 formant le boîtier 7 de l'alternateur 1. Une extrémité de l'arbre 3 sort de l'alternateur 1 et porte la poulie 9 permettant l'entraînement de cet alternateur 1 par le moteur thermique du véhicule par l'intermédiaire d'une courroie (non représentée).

Le rotor pourra comporter un corps réalisé en tôle feuilletée, qui comporte des logements. Des aimants permanents sont positionnés à l'intérieur d'au moins certains de ces logements comme visible par exemple dans les figures 1 et 2 du document EP0803962.

Le stator 2 est constitué par un empilage de tôles minces formant une couronne dont la face intérieure est pourvue d'encoches ouvertes vers l'intérieur recevant les bobinages des phases, généralement au nombre de trois P1-P3. Les parties des bobinages 10 qui s'étendent en saillie axiale de chaque côté du stator 2 sont appelées "chignons de bobinage" (cf. figure 3).

Afin de protéger la machine électrique en cas de surchauffe, on utilise une sonde de température 12 bien visible sur les figures 2 et 3 portée par un support 13 et reliée à son connecteur 15 déporté par l'intermédiaire d'un faisceau de connexion formé en l'occurrence de deux fils 18. La sonde de température 12 de préférence de type CTN (à Coefficient de Température Négatif) est destinée à être connectée à un module de commande via le connecteur 15 fixé sur une paroi du boîtier 7. Un circuit de protection intégré à un module de puissance permet de couper l'alimentation électrique de la machine lors de la détection d'une surchauffe par le module de commande. Le module de puissance ainsi que le module de commande de la machine sont porté par le flasque arrière 6.

L'ensemble formé par la sonde de température 12, son support 13, et le connecteur 15 constitue un sous-ensemble de la machiné appelé "unité de mesure thermique" et désigné par la référence 25 sur la figure 2.

Plus précisément, comme cela ressort clairement de la figure 3, le support de sonde 13 est configuré pour être inséré par déformation élastique à l'intérieur d'une cavité 28 allongée délimitée par une face interne du flasque arrière 6 et une face du chignon de bobinage 10 tournée vers le flasque arrière 6. L'insertion est telle que le support 13 prend appui contre la face interne du flasque 6 pour le maintien de la sonde 12 en contact avec le chignon de bobinage 10 par effet ressort du support 13.

A cette fin, le support 13 comporte un premier bras 131 et un deuxième bras 132 en vis-à-vis reliés entre eux par un fond 133 de manière à présenter une forme en U. Ce support de sonde 13 est réalisé dans un matériau rigide déformable élastiquement.

La sonde de température 12 est positionnée du côté de la face du bras 132 destinée à être tournée vers le chignon de bobinage 10. De préférence, le support 13 et la sonde 12 sont recouverts d'une résine pour assurer une isolation de l'ensemble par rapport au chignon de bobinage 10. La partie de la sonde 12 en contact avec le chignon de bobinage 10 pourra également être recouverte de résine.

A l'état repos, un écartement radial entre les deux bras 131, 132 étant supérieur à la dimension radiale correspondante de la cavité 28, l'opérateur peut pincer les deux extrémités libres des bras 131, 132 de manière à réduire l'écart entre les bras 131, 132 afin de pouvoir insérer le support 13 et la sonde 12 à l'intérieur de la cavité 28. Une fois que le support 13 et la sonde 12 sont en position et que l'opérateur a relâché les extrémités des bras 131, 132, l'effet ressort du support 13 est tel que la sonde 12 est appliquée automatiquement contre le chignon de bobinage 10. L'effet ressort suivant une direction sensiblement radiale par rapport à l'axe X de la machine permet d'absorber les différences de dimensions d'une machine à une autre dues aux tolérances de montage du stator 2 à l'intérieur du boîtier 7.

Le support de sonde 13 comporte de préférence un décrochement 137 sur le bras 132 portant la sonde 12 de manière à garantir un plaquage efficace de la sonde 12 contre le chignon de bobinage 10 tout en maintenant à distance le support de sonde 13 par rapport à la face du chignon 10 afin d'éviter d'éventuels court-circuits. En l'occurrence, le décrochement 137 présente une forme de cuvette dont le fond sur lequel est positionnée la sonde de température 12 fait saillie en direction du chignon de bobinage 10 par rapport à la face du bras 132 tournée vers le chignon 10.

Le support de sonde 13 comporte en outre une base de fixation 134 sur un rebord 35 d'orientation radiale du boîtier 7. Cette base de fixation 134 comporte une plaque s'étendant transversalement à une direction longitudinale d'allongement du support 13. Cette plaque s'étend depuis une extrémité libre du bras 131 vers l'extérieur du U. Une vis 37 est destinée à s'insérer à l'intérieur d'une ouverture de la plaque et d'un trou taraudé d'orientation axial ménagé dans la paroi latérale du flasque arrière 6 de manière à coincer la plaque entre la tête de la vis 37 et le rebord 35 radial du flasque arrière 6. Alternativement, les moyens de vissage du support de sonde 13 sur le rebord 35 pourront être remplacés par tout autre moyens de fixation adaptés, tels que des moyens d'encliquetage. La base de fixation 134 permet l'indexage de l'ensemble support 13 et sonde 12 dans la mesure où l'opérateur pourra déterminer le positionnement correct de l'ensemble lorsque la base de fixation 134 vient en appui contre le flasque arrière 6.

Il est à noter qu'une fois implanté à l'intérieur de l'alternateur 1, le support de sonde 13 s'étend majoritairement dans un plan P défini par l'intersection de l'axe X du stator 2 et d'un rayon du stator 2, en sorte que l'encombrement circonférentiel du support de sonde 13 est très limité. Sur la figure 3, le plan P correspond sensiblement au plan de la feuille.

Le support de sonde 13 comporte en outre un dispositif 135 de guidage des fils 18 de la sonde de température 12 suivant une direction sensiblement axiale de la machine par rapport à un axe X du stator et du rotor. Comme on peut le voir sur la figure 2, le dispositif de guidage 135 comporte en l'occurrence deux agrafes 136 situées de part et d'autre du décrochement 137 et configurées en sorte que les fils 18 s'étendant suivant la direction d'allongement longitudinale du bras 132 sont coincés entre les agrafes 136 et la face du bras 132 tournée vers le chignon de bobinage 10. Bien entendu, le nombre d'agrafes 136 pourra varier en fonction de l'application. Un tel guidage des fils de connexion 18 permet d'éviter la mise en contact des fils 18 avec les pièces de fonderie de son environnement, en particulier le boîtier 7 de la machine, afin de les préserver de l'usure.

Bien entendu, l'homme du métier pourra apporter des modifications à la machine électrique et au support de sonde 13 décrits précédemment sans sortir du cadre de l'invention. Ainsi notamment, le support de sonde 13 pourra présenter une forme globale en Z au lieu d'une forme U ou toute autre forme permettant d'obtenir l'effet ressort recherché pour le plaquage de la sonde de température 12 contre le chignon de bobinage 10. Alternativement, les agrafes 136 pourront être remplacées par des crochets, ou une gaine entourant le bras 132 et les fils 18 du faisceau de la sonde 12, ou tout autre moyen adapté au guidage des fils de connexion 18 le long du bras 132 suivant une direction sensiblement axiale. Le guidage des fils 18 peut également être réalisé par de la résine.

Il est à noter également que, bien que l'invention a été décrite dans le cadre d'un alternateur, elle pourrait également être mise en oeuvre de manière analogue avec toute autre machine électrique, telle qu'un moteur ou un alterno-démarreur.

## Revendications

1. Machine électrique tournante comportant un stator (2) fixé à l'intérieur d'un boîtier (7) comportant un flasque avant (5) et un flasque arrière (6) supportant chacun un palier pour le montage à rotation d'un arbre de rotor, un chignon de bobinage (10) s'étendant en saillie par rapport à un côté du stator (2), et une cavité (28) allongée axialement délimitée par une face interne d'un des flasques (5, 6) du boîtier (7) et une face dudit chignon de bobinage (10) tournée vers ledit flasque (6), **caractérisée en ce qu'**elle comporte en outre un support de sonde (13) portant une sonde de température (12), ledit support de sonde (13) étant inséré par déformation à l'intérieur de ladite cavité allongée (28) de manière à prendre appui contre ladite face interne du flasque (6) délimitant ladite cavité (28) pour le maintien de ladite sonde de température (12) en contact avec ledit chignon de bobinage (10) et **en ce que** le flasque délimitant ladite cavité allongée (28) est le flasque portant un module de commande et un module de puissance de la machine électrique.

2. Machine selon la revendication 1, **caractérisée en ce que** ledit support de sonde (13) s'étend majoritairement dans un plan (P) défini par l'intersection d'un axe du stator et d'un rayon du stator.

3. Machine selon la revendication 1 ou 2, **caractérisée en ce que** ledit support de sonde (13) comporte en outre une base de fixation (134) sur un rebord (35) d'orientation radiale dudit flasque (6) délimitant ladite cavité allongée (28).

4. Machine électrique selon l'une des revendications 1 à 3, **caractérisée en ce que** ledit support de sonde (13) comporte un dispositif de guidage (135) d'au moins un fil de connexion (18) de ladite sonde de température (12).

5. Machine selon la revendication 4, **caractérisée en ce que** ledit dispositif de guidage (135) comporte au moins une agrafe (136) configurée en sorte que le fil de connexion (18) de ladite sonde de température (12) est coincé entre ladite agrafe (136) et une face dudit support de sonde (13) tournée vers ledit chignon de bobinage (10).

6. Machine selon l'une des revendications 1 à 5, **caractérisée en ce que** ledit support de sonde (13) présente une forme en U.

7. Machine selon l'une des revendications 1 à 6, **caractérisée en ce que** ledit support de sonde (13) comporte un décrochement (137) sur lequel est positionné la sonde de température formant saillie par rapport à une face dudit support de sonde (13) tournée vers ledit chignon de bobinage (10).

8. Machine selon l'une des revendications 1 à 7, **caractérisé en ce que** ledit support de sonde (13) comporte un premier bras (131) et un deuxième bras (132) en vis-à-vis reliés entre eux par un fond (133) de manière à présenter une forme en U, ledit support de sonde étant apte à se déformer élastiquement pour assurer un plaquage d'une sonde de température (12) portée par un des bras (132) contre un chignon de bobinage (10) d'un stator de machine électrique.

9. Machine selon la revendication 8, **caractérisé en ce que** ledit support de sonde (13) comporte une base de fixation (134) s'étendant transversalement par rapport à une direction longitudinale d'allongement du support de sonde (13) depuis une extrémité libre du bras (131) opposé à celui portant la sonde de température (12).

10. Machine selon la revendication 8 ou 9, **caractérisé en ce qu'**un décrochement (137) réalisé sur le bras (132) sur lequel est positionné ladite sonde de température (12) forme une saillie par rapport à une face du bras (132) destinée à être tournée vers ledit chignon de bobinage (10).

11. Machine selon l'une des revendications 8 à 10, **caractérisée en ce que** ledit support de sonde (13) comporte un dispositif de guidage (135) d'au moins un fil de connexion (18) de ladite sonde de température (12).

12. Machine selon la revendication 11, **caractérisée en ce que** ledit dispositif de guidage (135) comporte au moins une agrafe (136) configurée en sorte qu'un fil de connexion (18) de ladite sonde de température (12) s'étendant suivant une direction d'allongement du bras (132) est coincé entre ladite agrafe (136) et une face dudit bras (132) destinée à être tournée vers ledit chignon de bobinage (10).
